# EUROPEAN PATENT SPECIFICATION

(11) **EP 1 612 716 B1**
(45) Date of publication and mention of the grant of the patent: **13.08.2008**
(21) Application number: 05251756.2
(22) Date of filing: 22.03.2005
(51) Int. Cl.: G06K 9/00

(54) **User interface for image input in a biometric authentication device; corresponding biometric authentication device, method and program**
Benutzerschnittstelle zur Bildeingabe in einem biometrischen Authentifikationsgerät; entsprechendes Gerät, Verfahren und Programm
Interface utilisateur pour la capture d'images dans un système d'authentification biométrique; système, méthode et logiciel correspondant

(30) Priority: 30.07.2004 JP 2004224270; 28.06.2004 JP 2004190438
(43) Date of publication of application: 04.01.2006
(73) Proprietor: FUJITSU LIMITED, Kawasaki-shi, Kanagawa 211-8588 (JP); Fujitsu Frontech Limited, Inagi-shi, Tokyo 206-8555 (JP)
(72) Inventor: Okamura, Sagiri c/o Fujitsu Frontech Limited, Inagi-shi Tokyo 206-8555 (JP); Awatsu, Kiyotaka c/o Fujitsu Frontech Limited, Inagi-shi Tokyo 206-8555 (JP); Mita, Yasuhiko c/o Fujitsu Frontech Limited, Inagi-shi Tokyo 206-8555 (JP); Kudo, Takahiro Fujitsu Terminal Systems Limited, Maebashi-shi Gunma 371-0855 (JP)
(74) Representative: Stebbing, Timothy Charles

(56) References cited:
- EP-A- 1 416 427
- EP-A2- 1 291 807
- WO-A-03/063054
- US-A1- 2003 072 474
- US-A1- 2004 062 423

## Description

This invention relates to a guidance screen control method of a biometric authentication device, to a biometric authentication device, and to a program for same, which utilizes biometric characteristics of a portion of the body of a human to perform individual authentication, and in particular relates to a guidance screen control method of a biometric authentication device, to a biometric authentication device, and to a program for same, which, at the time of detection of biometric information, provide guidance for the user to help obtain the information, to perform verification against already registered biometric information.

There exist numerous regions of the human body which can be used to differentiate individuals, among them fingerprints and toe-prints, the retina of the eyes, facial features, and blood vessel patterns. Advances in biometrics technology in recent years have been accompanied by proposals of various devices which identify biometric characteristics which are such regions of the human body to authenticate (identify) individuals.

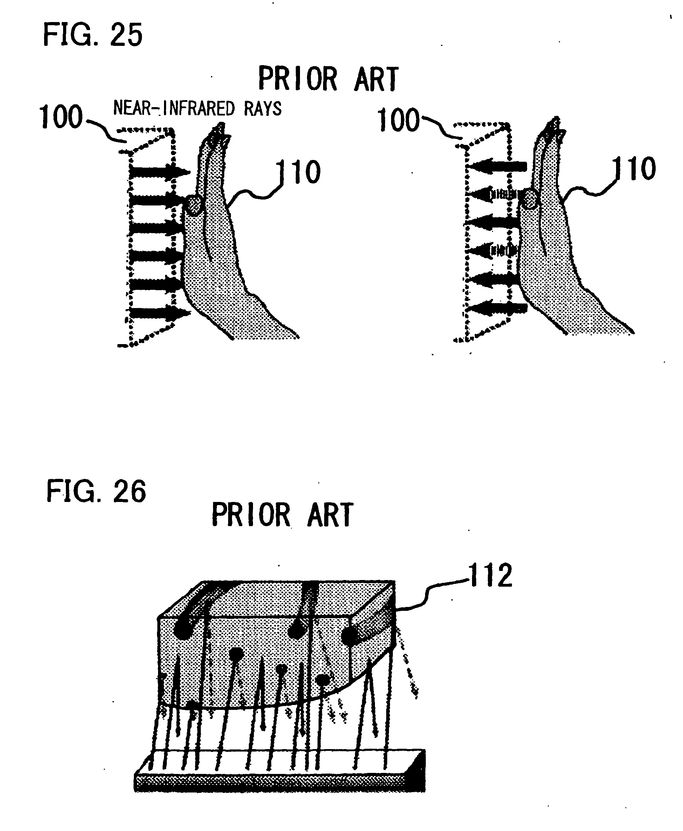

For example, because blood vessels in the palms and fingers and palm-prints provide a comparatively large quantity of individual characteristic data, they are suited to use for authentication where high reliability is required. In particular, the patterns of blood vessels (veins) remain unchanged from the foetus throughout life, and are thought to be completely unique, and so are suitable to identify an individual. Fig. 25 to Fig. 28 explain conventional technology for authentication using the palm. As shown in Fig. 25, at the time of registration or authentication, the user brings the palm of a hand 110 close to an image capture device 100. The image capture device 100 emits near-infrared rays, which are incident on the palm of the hand 110. The image capture device 100 receives the near-infrared rays reflected from the palm of the hand 110 using a sensor.

As shown in Fig. 26, hemoglobin (haemoglobin) within the red corpuscles flowing in the veins 112 has lost oxygen. This hemoglobin (reduced hemoglobin) absorbs near-infrared rays at wavelengths near 760 nanometers. Consequently when near-infrared rays are made incident on the palm of a hand, reflection is reduced only in the areas in which there are veins, and the intensity of the reflected near-infrared rays can be used to identify the positions of veins.

Accordingly, a user first registers in a server or ID card the vein image data for the palm of his own hand, using the image capture device 100. Next, in order to identify (verify) himself as the user, the user uses the image capture device 100 of Fig. 25 to cause the vein image data of his own palm to be read.

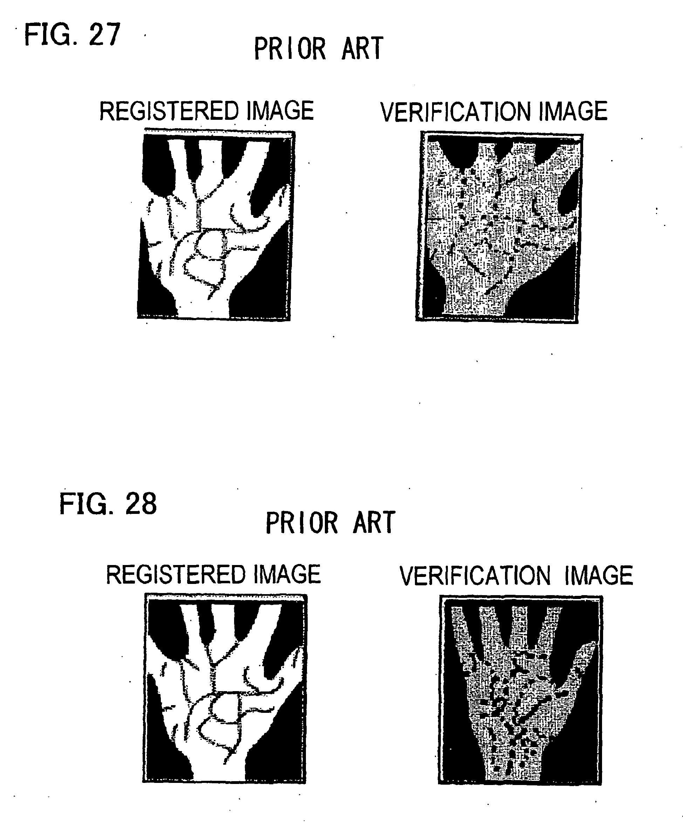

The individual is authenticated by comparing the patterns of veins in the registered vein image retrieved using the user's ID and in the vein verification image read by the image capture device 100. For example, on comparing the vein patterns in the registered image and a verification image as in Fig. 27, the individual is authenticated as the registered user. On the other hand, upon comparison of the vein patterns in a registered image and in a verification image as in Fig. 28, the individual is not authenticated (see for example Japanese Patent Laid-open No. 2004-062826), i.e. is identified as not being the registered user.

In such non-contact detection of biometric information, the user's body can move freely relative to the image capture device 100, and in particular the hand can move freely. On the other hand, the portion 110 for detection of the user must be positioned within the image capture range of the image capture device 100 to enable accurate detection. Methods to achieve this have been proposed in which, each time an image is captured, the position and orientation of the hand is detected, and when accurate image capture is not possible, a display or voice output is employed to convey the inappropriateness of the position or orientation of the hand (see for example WO 04/021884) or faces (EP 1 291 807). By means of this method, because detection is contact-free, accurate detection of biometric information is possible even when there is no sense of resistance to the hand or body during detection.

In this detection of biometric information, the body, and in particular the hand moves freely. In order to perform rapid biometric authentication, however, it is necessary to perform image capture frequently, detect appropriate images, and subject these to the authentication process. Hence even if, as a consequence of the image capture state at each image capture, a display is presented indicating that the body part position or orientation is inappropriate, there is the possibility that the display may change in a short period of time, causing the user to be confused.

Similarly, because the display switches instantaneously, the screen may appear to the user to be flickering, so that again the display is not used effectively to guide the user. Thus, the process becomes slow and unreliable, and rapid authentication (verification) does not occur.

It is therefore desirable to provide a guidance screen control method of a biometric authentication device, a biometric authentication device, and a program for same, to effectively guide the body part of the user to be detected, which can move freely, within the range of image capture of the image capture device.

It is further desirable to provide a guidance screen control method of a biometric authentication device, a biometric authentication device, and a program for same, to guide the body part into the range of image capture of the image capture device and shorten the time required for image capture, even if the body part moves freely, without causing the user to be confused.

It is still further desirable to provide a guidance screen control method of a biometric authentication device, a biometric authentication device, and a program for same, to guide the body part into the range of image capture, even when the image capture device performs image capture frequently, without causing the user to be confused.

According to one aspect of the invention, there is provided a biometric authentication device for detecting biometric characteristic data from a body part of a first user and registering the data (for example, in a server or card); and for capturing an image of a body part of a second user, detecting biometric characteristic data from the captured image, and verifying this detected characteristic data against the above registered characteristic data, to identify whether the second user and the first user are the same person. The authentication device has an image capture device for capturing one or more images of a body part, a display device for displaying screens to provide guidance to the user for operation of the image capture device, and a control unit for controlling (performing) image capture operations of the image capture device, detecting biometric characteristic data from the one or more captured images of the body part, and verifying this against registered characteristic data. The control unit is operable to judge, for each of the one or more captured images of the image capture device, whether the image capture operation has been successful, to temporarily store the cause of an unsuccessful image capture operation, and, when image capture is not successful even after a prescribed number of image capture operations of the image capture device, to analyze the temporarily stored causes, and to display a guidance screen on the display device according to the results of the analysis.

According to another aspect, there is provided a guidance screen control method for use with a biometric authentication device in which biometric characteristic data from a body part of a first user is detected and registered, an image of a same body part of a second user is captured, biometric characteristic data is detected from the captured image and is verified against the above registered characteristic data to authenticate the second user as the first user. The method has a step of judging, from the output of an image capture operation of an image capture device which captures the image of the body part, whether the image capture operation has been successful; a step of temporarily storing the cause of an unsuccessful image capture operation; a step, when image capture is unsuccessful even after a prescribed number of image capture operations of the image capture device, of analyzing the causes stored temporarily; and a step of displaying a guidance screen according to analysis results on a display device.

A program of a third aspect causes a computer to execute a step of judging, from the output of an image capture operation of an image capture device which captures an image of a body part, whether the image capture operation has been successful; a step of temporarily storing the cause of an unsuccessful image capture operation; a step, when image capture is unsuccessful even after a prescribed number of image capture operations of the above image capture device, of analyzing the causes stored temporarily; and a step of displaying a guidance screen according to the analysis results on a display device.

In the first aspect, it is preferable that the control unit displays on the display device a guidance screen according to statistical information for the temporarily stored causes.

It is further preferable that the image capture device has an image capture sensor and a distance sensor for measuring the distance from the body part, and that the control unit detects shifts in position of the image capture sensor and the body part and shifts in distance between the image capture sensor and the body part, and judges whether the image capture operation has been successful.

It is also preferable that the control unit classifies causes of unsuccessful image capture operations as shifts in position or shifts in distance, and selectively displays, on the display device, a guidance screen for a shift in position or a guidance screen for a shift in distance, according to the classification result.

It is also preferable that the control unit displays on the above display screen a screen indicating the order (sequence) of operation of the above image capture device prior to the initiation of the image capture operations.

It is also preferable that, when a verification (authentication) result is not satisfactory, the control unit, after displaying on the display device a screen to repeat operation, initiates (a new) image capture operation of the image capture device.

It is also preferable that the image capture device has at least an image capture sensor, and that the control unit detects shifts in position of the image capture sensor and the body part, judges whether an image capture operation has been successful, classifies the causes of unsuccessful image captures according to the direction of the shift in position, and displays, on the display device, a guidance screen indicating the direction of the shift in position according to the classification result.

It is also preferable that the characteristic pattern of the body part be a blood vessel image pattern of the body part.

It is also preferable that the control unit displays, as the guidance screens, text indicating the analysis result and an image indicating the appropriate positional relationship of the body part to the image capture device.

When image capture (including distance measurement) is performed a plurality of times at short intervals and image capture NG (no good, i.e. failure) occurs frequently, the failure causes are stacked (stored temporarily) for future use, and if after a prescribed number of image capture operations, the problem of image capture NG (failure) is still not eliminated, it is judged that the relationship between the body part and the sensor must be corrected, the stacked image capture NG causes are analyzed, and screen guidance is provided according to the results of analysis of the relationship between the body part and sensor.

Hence because the guidance screen does not change frequently, the user can fully comprehend the cause and can change the position of the body part relative to the sensor. By this means, confusion on the part of the user is prevented, the body part can be moved quickly to an appropriate position and distance relative to the sensor, and the speed of authentication can be increased. Further, because the cause resulting in the greatest number of image capture NGs is selected and a screen indicating this cause is presented, causes resulting in only occasional image capture NGs can be excluded, and the user can be guided more reliably.

Reference is now made, by way of example only, to the accompanying drawings, in which:
Fig. 1 shows the configuration of a biometrics authentication system applied to an ATM in one embodiment of the invention;
Fig. 2 is a perspective view of the ATM of Fig. 1;
Fig. 3 is a block diagram of the ATM of Fig. 1;
Fig. 4 is a functional block diagram of the biometrics information verification processing of Fig. 3;
Fig. 5 is a top view showing the relation between the sensor of Fig. 4 and a user's palm;
Fig. 6 is a lateral view showing the relation between the sensor of Fig. 4 and the palm of the hand;
Fig. 7 explains the blood vessel image of Fig. 4;
Fig. 8 explains the blood vessel image data of Fig. 4;
Fig. 9 is a first flow diagram of transaction processing, comprising screen guidance processing of this invention;
Fig. 10 is a second flow diagram of transaction processing, comprising screen guidance processing of this invention;
Fig. 11 is a flow diagram of the image capture processing of Fig. 9;
Fig. 12 explains a first operation instruction screen image at the time of transaction initiation in Fig. 9;
Fig. 13 explains a second operation instruction screen image at the time of transaction initiation in Fig. 9;
Fig. 14 explains a third operation instruction screen image at the time of transaction initiation in Fig. 9;
Fig. 15 explains a fourth operation instruction screen image at the time of transaction initiation in Fig. 9;
Fig. 16 explains a fifth operation instruction screen image at the time of transaction initiation in Fig. 9;
Fig. 17 explains a sixth operation instruction screen image at the time of transaction initiation in Fig. 9;
Fig. 18 explains a seventh operation instruction screen image at the time of transaction initiation in Fig. 9;
Fig. 19 explains a first operation guidance screen image at the time of unsuccessful image capture in Fig. 9;
Fig. 20 explains a second operation guidance screen image at the time of unsuccessful image capture in Fig. 9;
Fig. 21 explains a third operation guidance screen image at the time of unsuccessful image capture in Fig. 9;
Fig. 22 explains a fourth operation guidance screen image at the time of unsuccessful image capture in Fig. 9;
Fig. 23 explains a state screen image at the time of unsuccessful image capture in Fig. 9;
Fig. 24 explains an operation guidance screen image at the time of unsuccessful image capture in another embodiment of the invention;
Fig. 25 explains a conventional palm image capture device;
Fig. 26 explains the principles of a conventional palm image capture device;
Fig. 27 explains one conventional palm authentication technology; and
Fig. 28 explains another conventional palm authentication technology.

Below, embodiments of the invention are explained in the order of a biometrics authentication system, biometrics authentication processing method, guidance screen control method, and other embodiments.

### Biometrics Authentication System

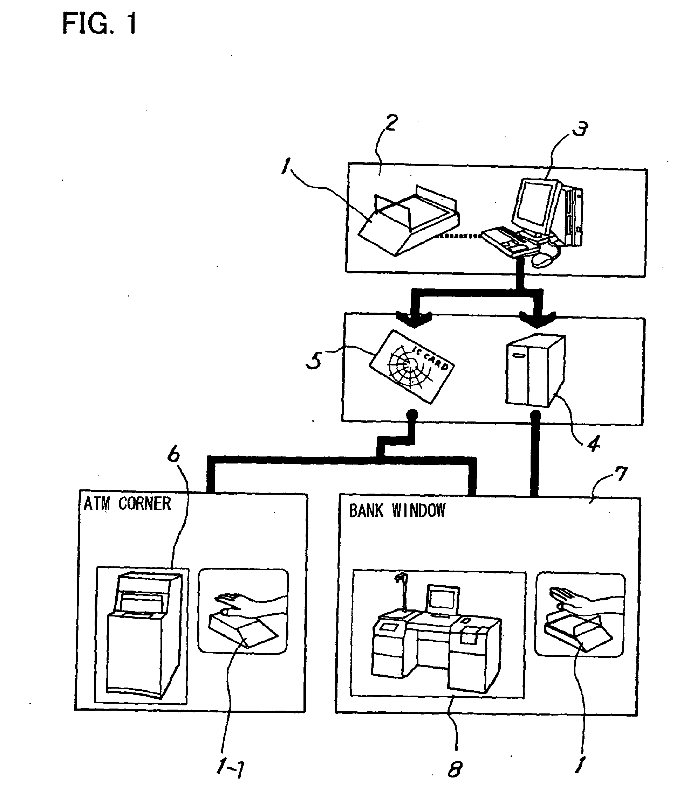

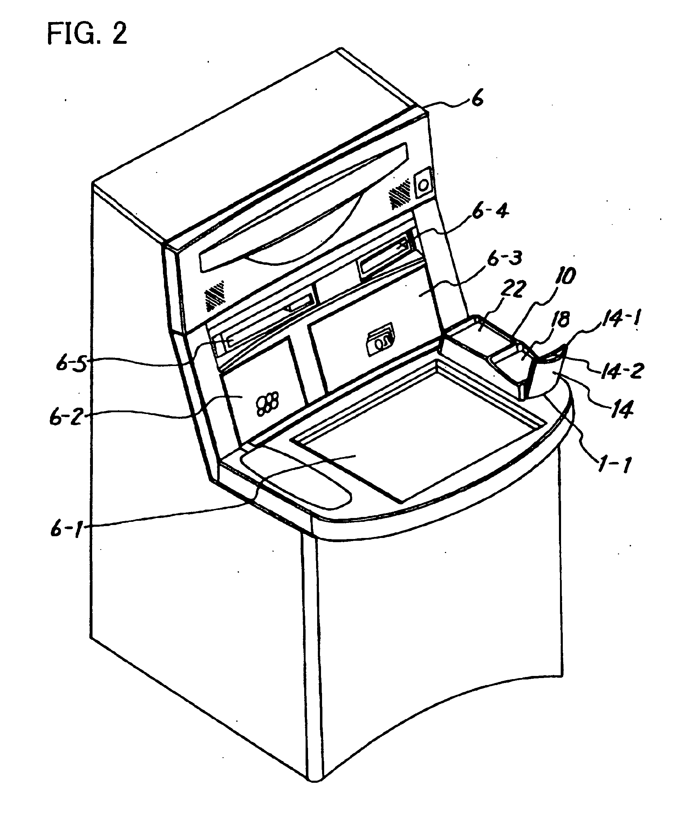

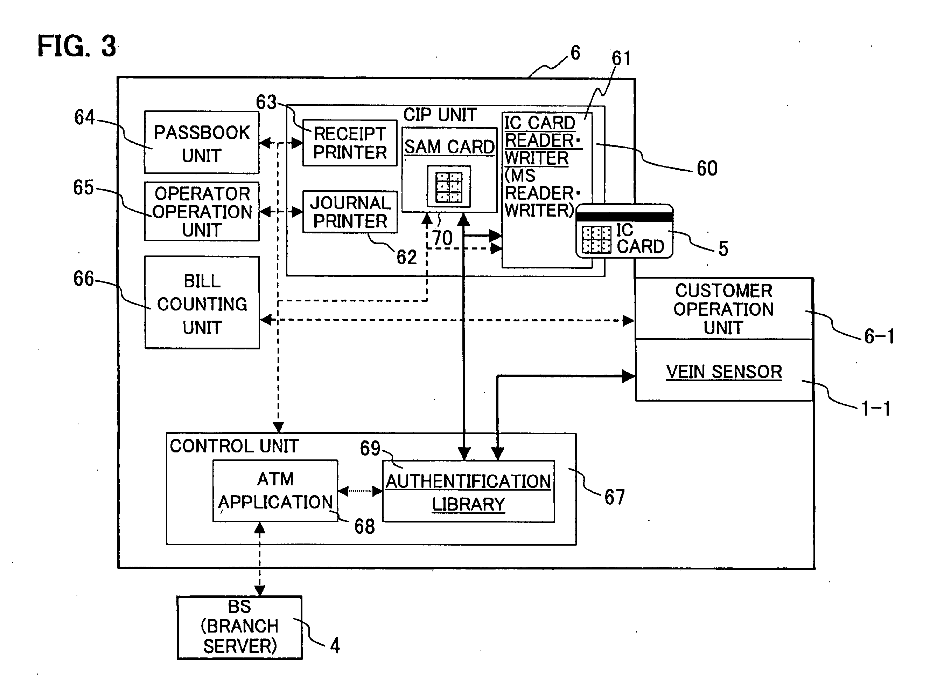

Fig. 1 shows the configuration of a biometrics authentication system of an embodiment of the invention, Fig. 2 is a perspective view of an automated transaction machine (ATM) shown in Fig. 1, and Fig. 3 is a block diagram of the automated transaction machine of Fig. 2.

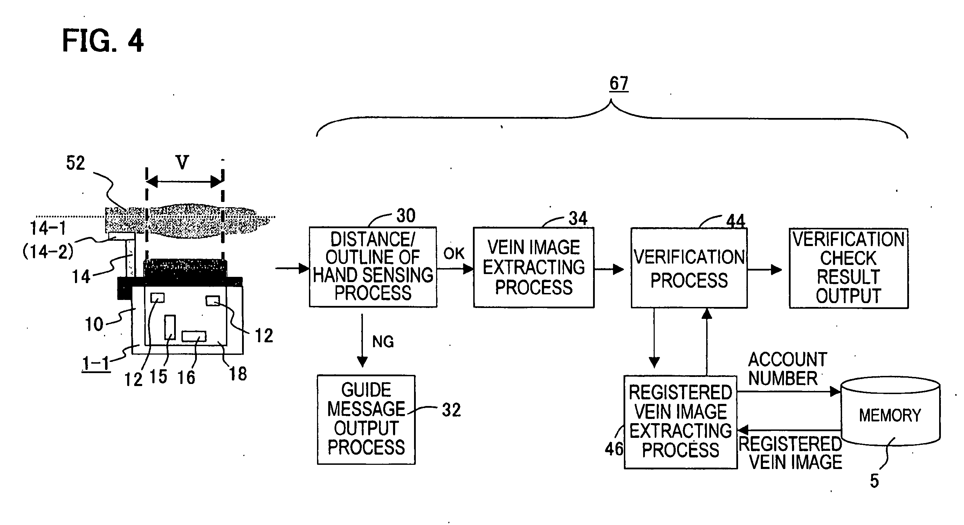

Fig. 1 shows an example of a palm vein pattern authentication system in a financial institution, as an example of a biometrics authentication system. At a service area 2 of the financial institution, a palm image capture device 1 explained in Fig. 4, and a branch office terminal (for example, a personal computer) 3 connected thereto are provided. A user requesting vein pattern authentication places his hand over the palm image capture device (hereafter called the "image capture device") 1. The image capture device 1 reads an image of the palm, and through blood vessel image extraction processing performed by the terminal 3, the vein pattern is extracted and is registered in the terminal 3 as vein pattern data.

This vein pattern data is stored in the storage portion 4a of a database server 4 connected to the terminal 3, or in a memory device (for example, an IC card) 5 held by the user. The server 4 is connected to the service area terminal 8 of a service area 7 of the financial institution, and the service area terminal 8 is connected to an image capture device 1.

In order to make a withdrawal or perform some other financial transaction in the service area 7 of the financial institution, the user places his hand over the image capture device 1 provided in the service area 7. The image capture device 1 reads an image of the palm, and by means of blood vessel image extraction processing in the service area terminal 8, the vein pattern is extracted. Through verification processing, the service area terminal 8 verifies this vein pattern, as vein data, against the vein data registered in the database server 4, and determines whether the user is the individual registered in the server 4.

Further, the server 4 is connected to an ATM (automated transaction machine) 6 of the financial institution, so that using the ATM 6, transactions based on vein pattern authentication become possible. In order for a user to use the ATM 6 to make a withdrawal or perform some other financial transaction, the hand is placed over an image capture device 1-1 provided in the ATM 6. The image capture device 1-1 reads the palm image. Similarly to the service area terminal 8, the ATM 6 extracts the vein pattern (blood vessel image), and verifies this, as vein data, against the vein data registered in either an IC card 5 held by the user, or in the database server 4, and authenticates (identifies) the user as the registered individual, or not.

Fig. 2 and Fig. 3 show the configuration of the ATM 6 of Fig. 1. As shown in Fig. 2, the ATM 6 has, on the front face thereof, a card insertion/ejection aperture 6-4; a bankbook insertion/ejection aperture 6-5; a paper currency insertion/dispensing aperture 6-3; a coin insertion/dispensing aperture 6-2; and a customer operation panel 6-1 for operation and display.

In this example, the image capture device 1-1 is provided on the side of the customer operation panel 6-1. The sensor unit 18 explained in Fig. 4 is mounted on the forward side of the main unit 10 of the image capture device 1. On the forward portion (on the user side) of the sensor unit 18 is provided a front guide 14. The front guide 14 comprises a sheet of synthetic resin, transparent or substantially transparent. In order to serve the purposes of guiding the hand of the user in the front and of supporting the wrist, the cross-sectional shape of the front guide 14 has a vertical body and, in the top portion, a horizontal portion 14-1 to support the wrist. One or more depressions 14-2 are formed in the center of the horizontal portion 14-1, to facilitate positioning of the wrist.

Further, the sensor unit 18 of the main unit 10 faces rearwards and is inclined upwards, and a flat portion 22 is provided therebehind.

As shown in Fig. 3, the ATM 1 has a CIP (Card Reader Printer) unit 60 having a card insertion/ejection aperture 6-4; a bankbook unit 64 having a bankbook insertion/ejection aperture 6-5; a paper currency/coin counter unit 66 having a paper currency insertion/dispensing aperture 6-3 and a coin insertion/dispensing aperture 6-2; an attendant operation portion 65; a control unit 67; a customer operation panel 6-1 for operation and display; and an image capture device (vein sensor) 1-1.

The CIP unit 60 has an IC card reader/writer 61 which reads and writes the magnetic stripe and IC chip of an IC card 5; a receipt printer 63 which records transactions on a receipt; and a journal printer 62 which prints the history of transactions on journal forms.

The bankbook unit 64 records transactions on pages of a bankbook, and when necessary turns the pages. The attendant operation portion 65 is for operations by an attendant who performs operations upon occurrence of a fault or during inspections based on status display. The paper currency/coin counting unit 66 differentiates, counts, and stores inserted paper currency and coins, and counts and dispenses paper currency and coins in the required quantities.

The control unit 67 communicates with the server 4, and has an ATM application 68 which controls ATM operation and an authentication library 69 for authentication processing. A portion of this ATM application 68 acts in concert with the authentication library 67 so as to control biometrics authentication guidance screens of the UOP (customer operation panel) 6-1.

### Biometrics Authentication Processing Method

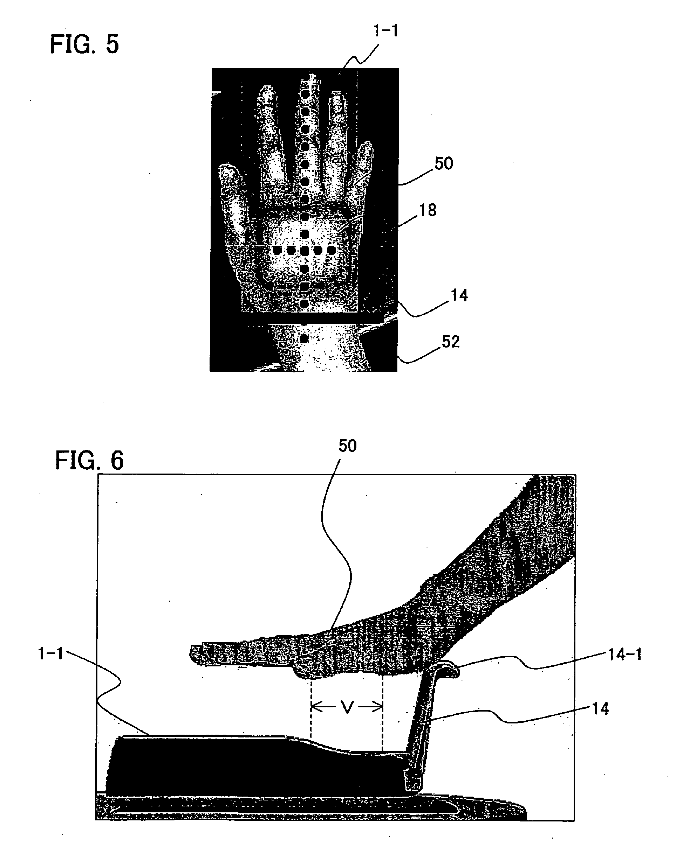

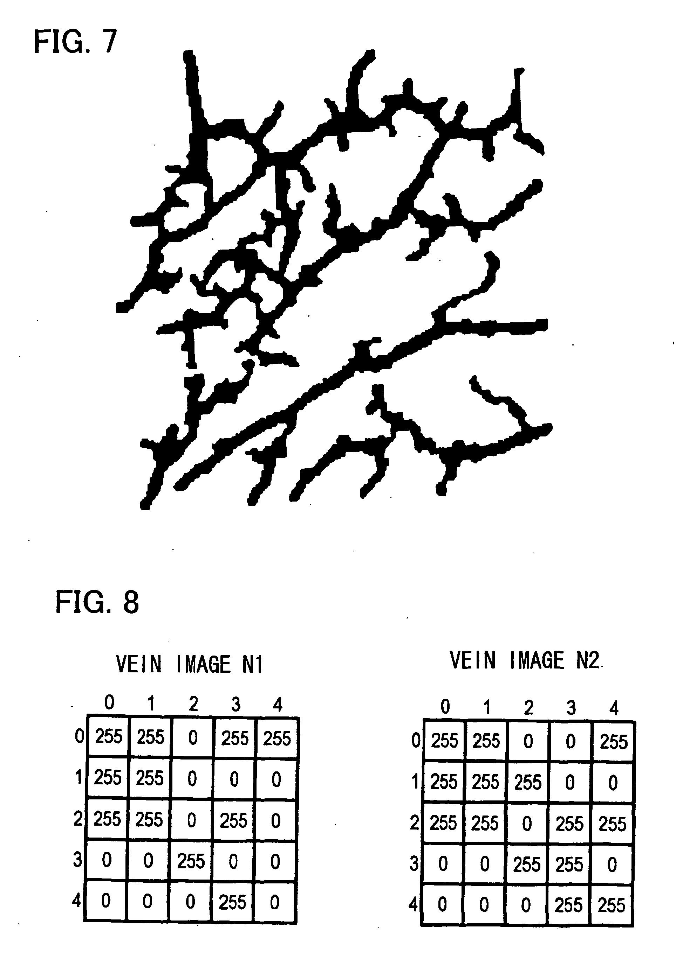

Fig. 4 is a block diagram of biometric authentication processing in an embodiment of the invention, Fig. 5 is a top view of the image capture device 1-1 of Fig. 4, Fig. 6 is a cross-sectional view of the image capture device of Fig. 4, Fig. 7 explains detected blood vessel images in Fig. 4, and Fig. 8 explains verification processing for Fig. 4.

As shown in Fig. 4, in the palm image capture device 1-1 of Fig. 1, the sensor unit 18 is mounted substantially in the center of the main unit 10. The front guide 14 is provided in the front portion (on the user side) of the sensor unit 18. The front guide 14 comprises a sheet of transparent or substantially transparent synthetic resin.

The front guide 14 serves the purposes of guiding the hand of the user on the device and of supporting the wrist. Hence above the sensor unit 18, the front guide 14 aids the user by guiding the wrist, and also supports the wrist. As a result, the attitude of the palm above the sensor unit 18, that is, the position, inclination, and size can be regulated. The cross-sectional shape of the front guide 14 has a vertical body and, in the top portion, a horizontal portion 14-1 to support the wrist. One or more depressions 14-2 are formed in the center of the horizontal portion 14-1, to facilitate positioning of the wrist.

On the other hand, the sensor unit 18 is provided with an infrared sensor (CMOS sensor) with focusing lens 16, and with a distance sensor 15 in the center, and on the periphery thereof with a plurality of near-infrared light-emitting elements (LEDs) 12. For example, near-infrared LEDs 12 are provided in eight places on the periphery, to emit near-infrared rays upwards.

The readable region V of this sensor unit 18 is regulated by the relation between the sensor, the focusing lens, and near-infrared light emission region. Hence the position and height of the front guide 14 is set such that the supported wrist is positioned in the readable region V.

As shown in Fig. 5, when the hand 50 is extended with palm flat, the palm has maximum area, and moreover is flat, so that when the palm is subjected to image capture in the image capture region V of the sensor unit 18, an accurate vein pattern which can be used in registration and verification is obtained. As shown in Fig. 6, when the distance from the sensor unit 18 to the palm is within a prescribed range, a sharp, focused image is obtained by the sensor 16 of the sensor unit 18.

Hence as shown in Fig. 4, by having the front guide 14 support the wrist 52 above the sensor unit 18, the position, inclination and height of the palm above the sensor unit are made precise with respect to the image capture range of the sensor unit 18, and the user's hand can be guided and supported.

Returning to Fig. 4, the authentication library 69 of the control portion 67 of the ATM 6 connected to the image capture device 1 executes a series of registration processes 30 to 46. The control portion 67 of the ATM 6 has, for example, a CPU, various types of memory, interface circuitry, and other circuits necessary for data processing. The CPU executes the series of registration processes 30 to 46.

Distance/hand outline detection processing 30 receives the distance from the image capture device 1-1 measured by the distance sensor 15, judges that the palm or other object is at a distance within a prescribed range from the sensor unit 18, and moreover the outline of the hand is detected from the image captured by the sensor unit 18, and based on the outline, a judgment is made as to whether the image can be used in registration and verification processing. For example, a judgment is made as to whether the palm appears sufficiently in the image.

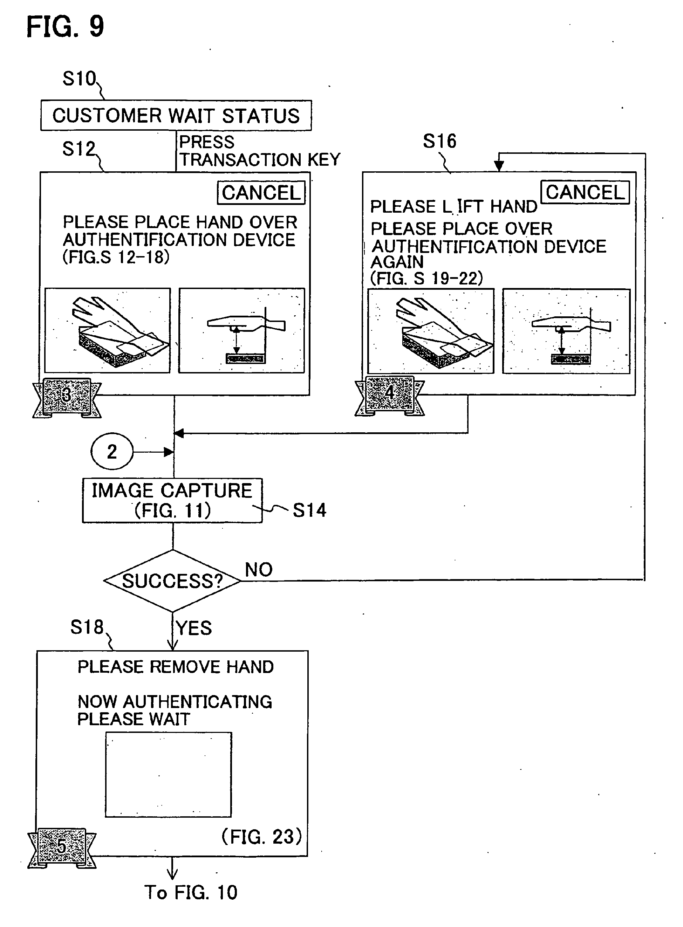

As explained in Fig. 9 below, guidance message output processing 32 outputs to the UOP (User Operation Panel) 6-1 of the ATM 6 a message guiding the palm to the left or right, forward or backward, upward or downward, when the distance measured by the distance sensor 15 indicates that the hand is outside the image capture range, and when the image cannot be used in registration and verification processing. By this means, the hand of the user is guided into position over the image capture device 1.

Blood vessel image extraction processing 34 extracts a vein image from the image of the hand when hand outline detection processing 30 judges that an image has been captured with the hand held correctly. That is, as explained using Fig. 25 and Fig. 26, grayscale data of the image of the palm such as that of Fig. 8 is obtained through differences in reflectivity. The vein pattern image is an image like that shown in Fig. 7; the data is grayscale data such as that in Fig. 8.

Registered blood vessel image retrieval processing 46 retrieves registered blood vessel image data R1, R2, R3 corresponding to the individual ID (for example account number) from the storage portion of the IC card 5 shown in Fig. 3. Verification processing 44 compares the blood vessel image data N1 detected in blood vessel image detection processing 34 with registered blood vessel image data N2 as shown in Fig. 8, performs verification processing, and outputs the verification result.

In such a non-contact authentication system, the above-described guidance messages are convenient for the user, and are useful in operation by users not familiar with the authentication system and in enabling rapid authentication.

### Guidance Screen Control Method

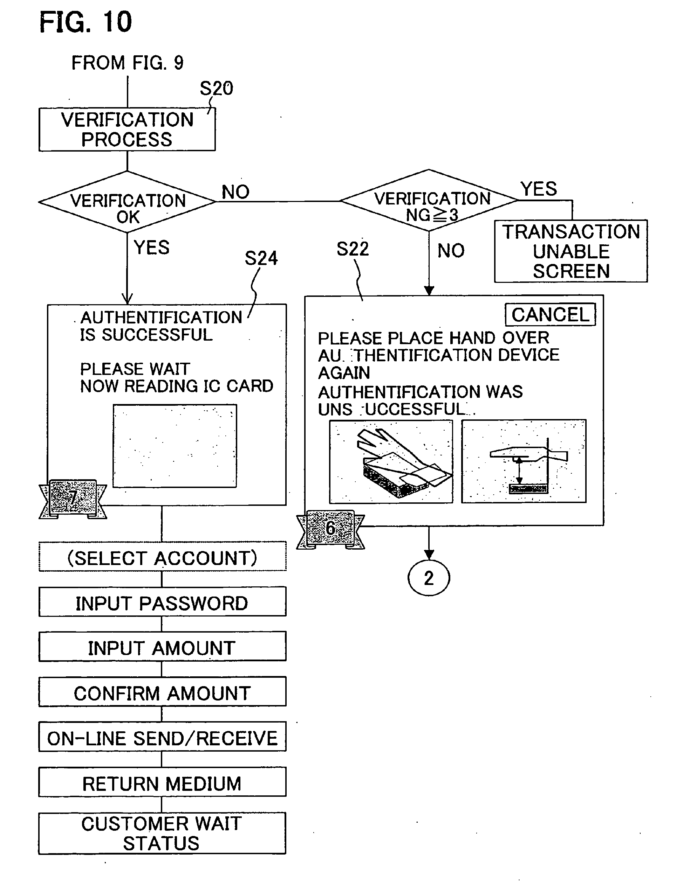

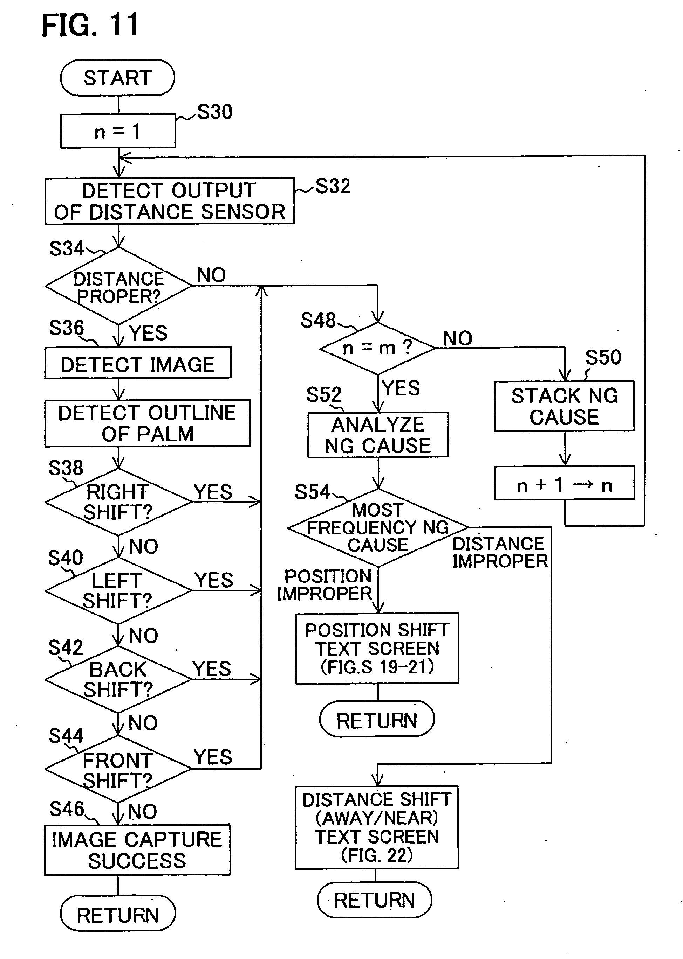

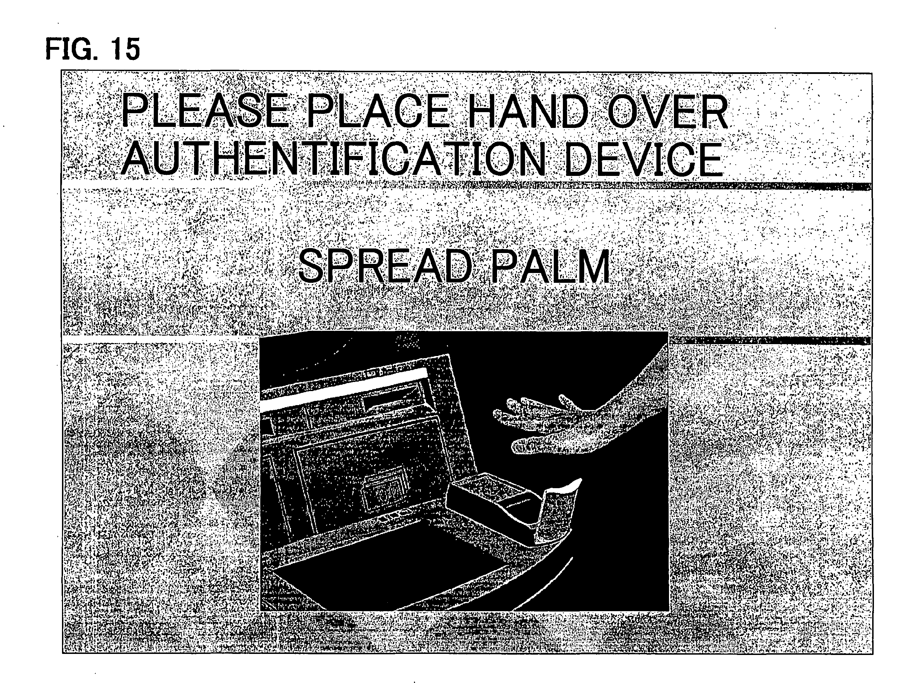

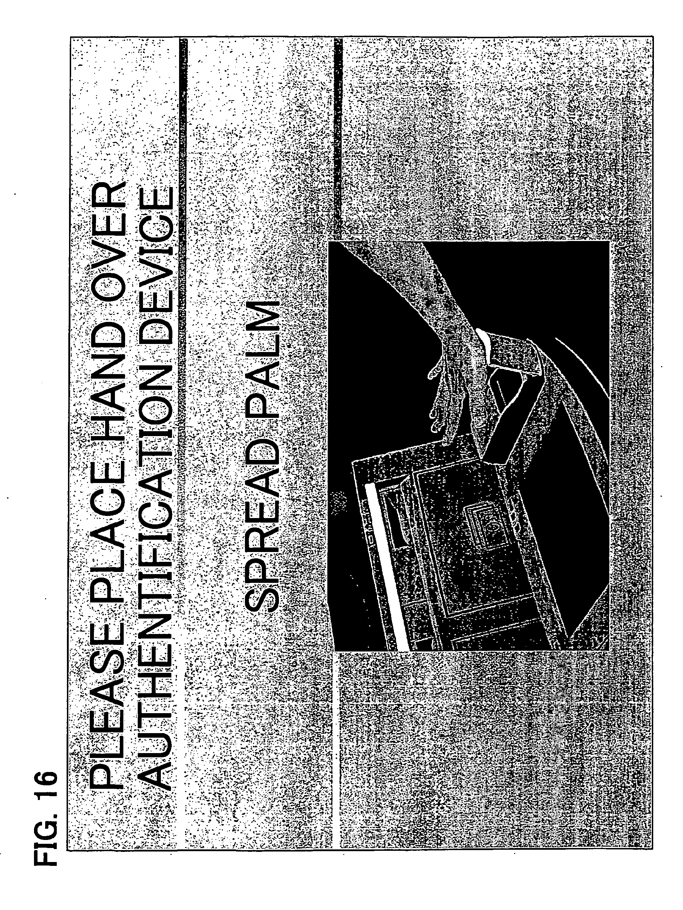

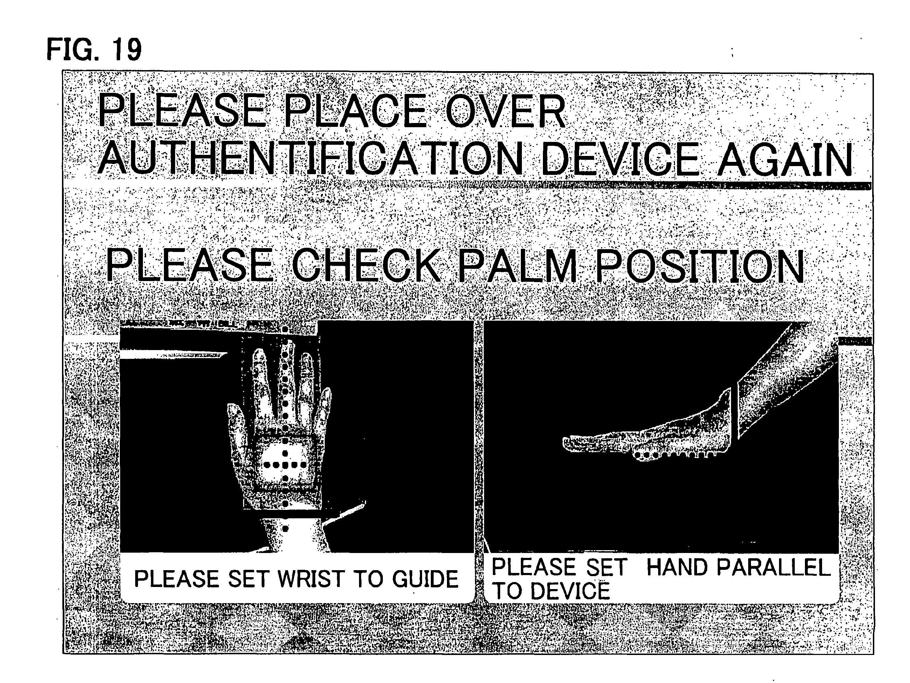

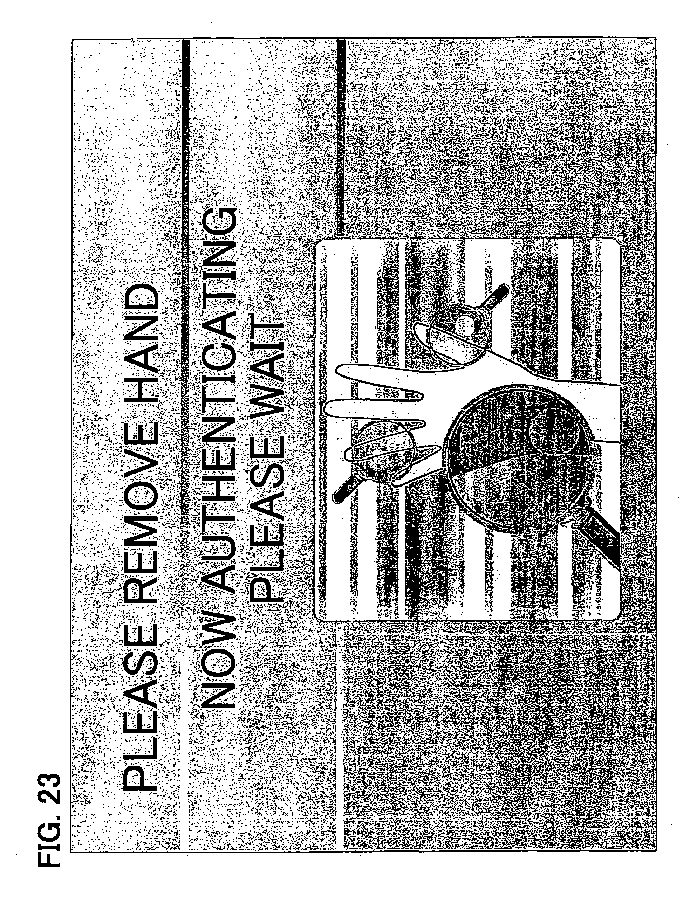

Next, the distance/hand outline detection processing 30 and guidance message output processing 32 of Fig. 4 are explained in more detail using Fig. 9 to Fig. 22. Fig. 9 and Fig. 10 show the flow of transaction processing including guidance message processing; Fig. 11 shows the flow of image capture processing in Fig. 9; Fig. 12 to Fig. 18 explain palm authentication operation guidance screen images at the time of initiation of a transaction; Fig. 19 to Fig. 22 explain guidance screen images when image capture is not successful; and Fig. 23 explains a notification screen image when image capture is successful.

Below, Fig. 11 to Fig. 23 are referenced in explaining transaction processing including guidance message processing of Fig. 9 and Fig. 10.

(S10) While in a customer-awaiting state, the control unit 67 of the ATM 6 detects the pressing of a transaction key from the UOP 6-1.

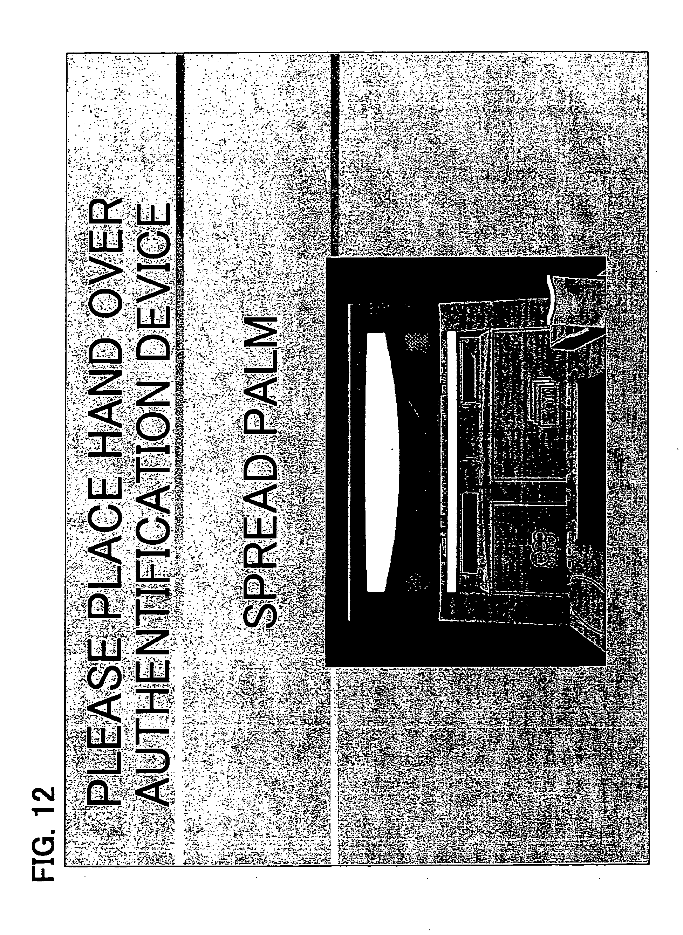

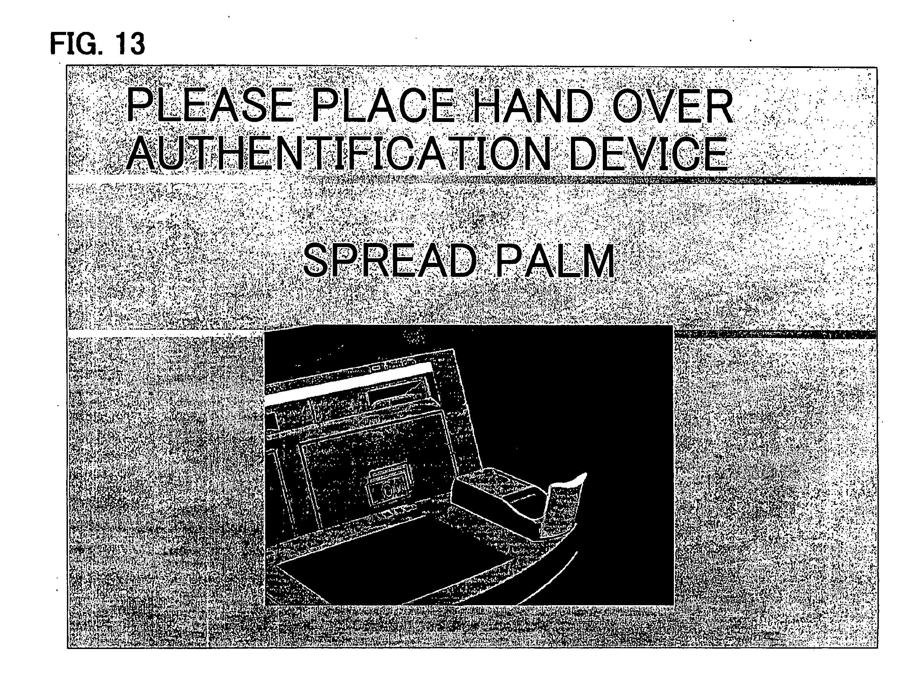

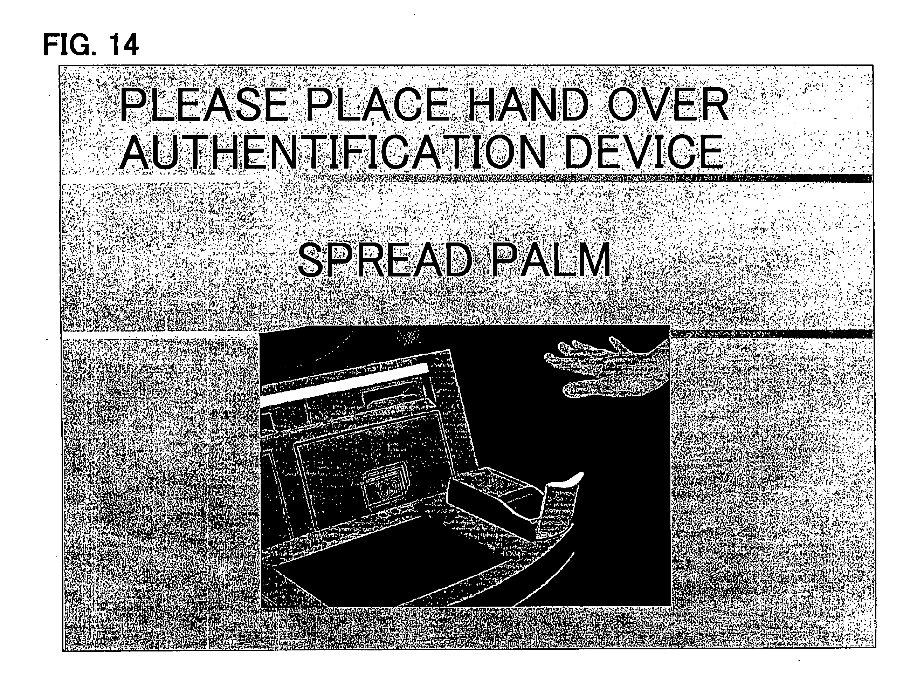

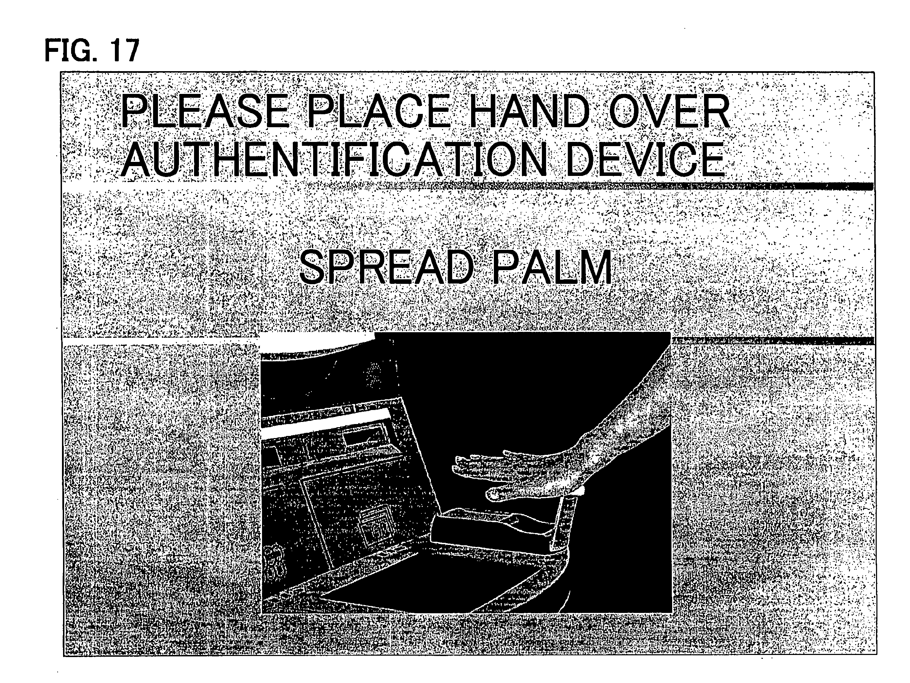

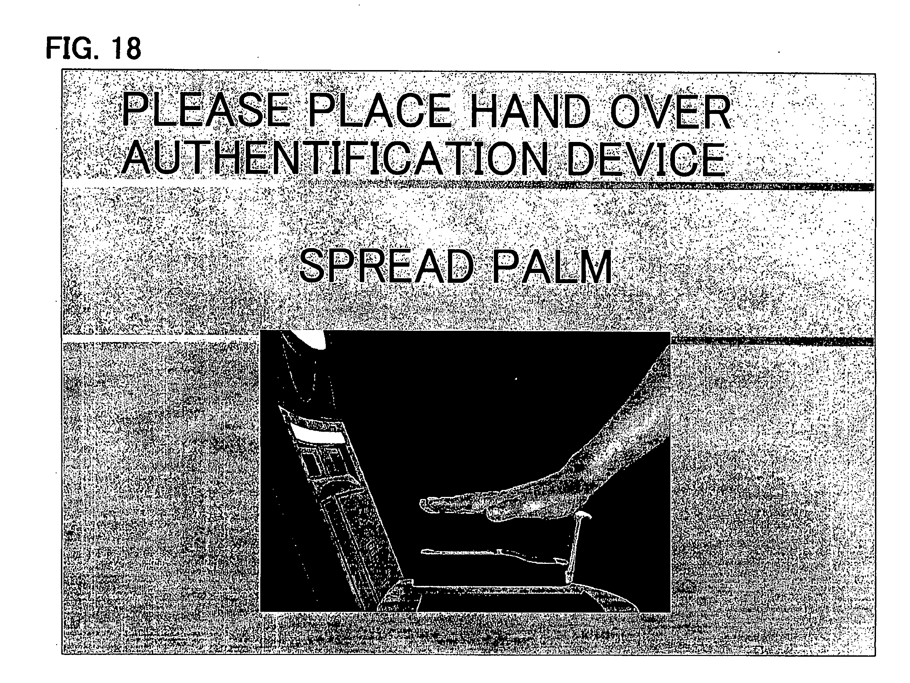

(S12) When a transaction key is depressed and an IC card 5 is inserted, screens giving guidance in palm authentication operation at the initiation of a transaction, shown in Fig. 12 to Fig. 18, are displayed dynamically on the UOP 6-1. As shown in Fig. 12 to Fig. 18, screens consist of text such as "Please place your hand over the authentication device" and "Spread your hand out wide" and images of the order of operation. Shown in series are a front image of the ATM 6 which is the first screen in Fig. 12, a perspective-view image of the ATM 6 centered on the authentication device which is the second screen in Fig. 13, images of a hand being brought successively closer to the authentication device in the screen of Fig. 13 which are the third, fourth, and fifth screens in Fig. 14, Fig. 15 and Fig. 16, a perspective-view image of a hand placed over the authentication device which is the sixth image in Fig. 17, and a side-view image of the hand placed over the authentication device which is the seventh screen in Fig. 18. These, images of the order of operation are displayed repeatedly within a prescribed operation time (for example, 10 seconds).

(S14) The control unit 67 of the ATM 6 executes the image capture processing described below in Fig. 11, performs a prescribed number of image captures until image capture is successful, and within the prescribed number, judges whether each image capture is successful.

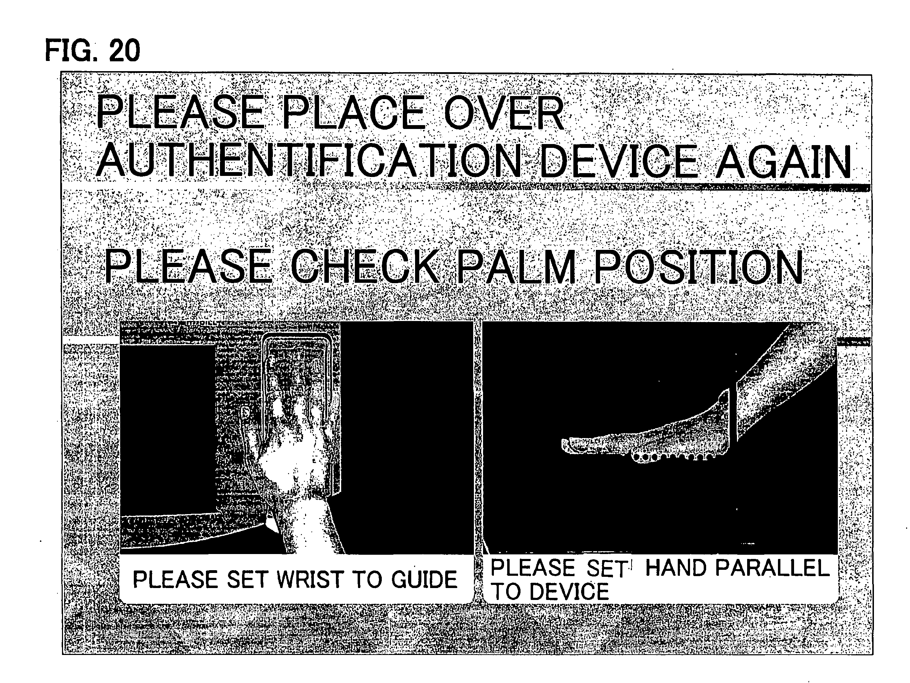

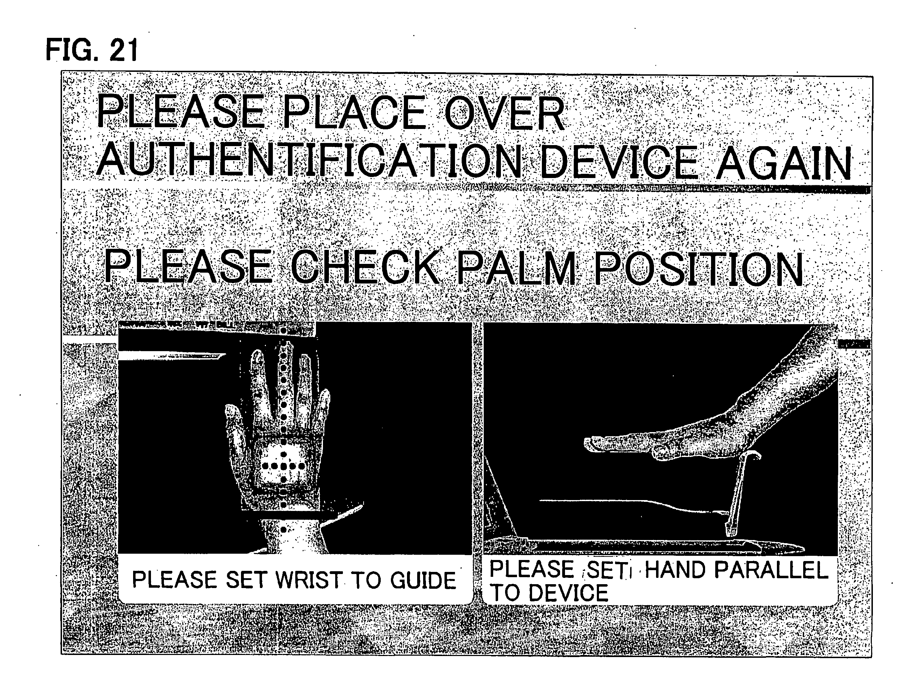

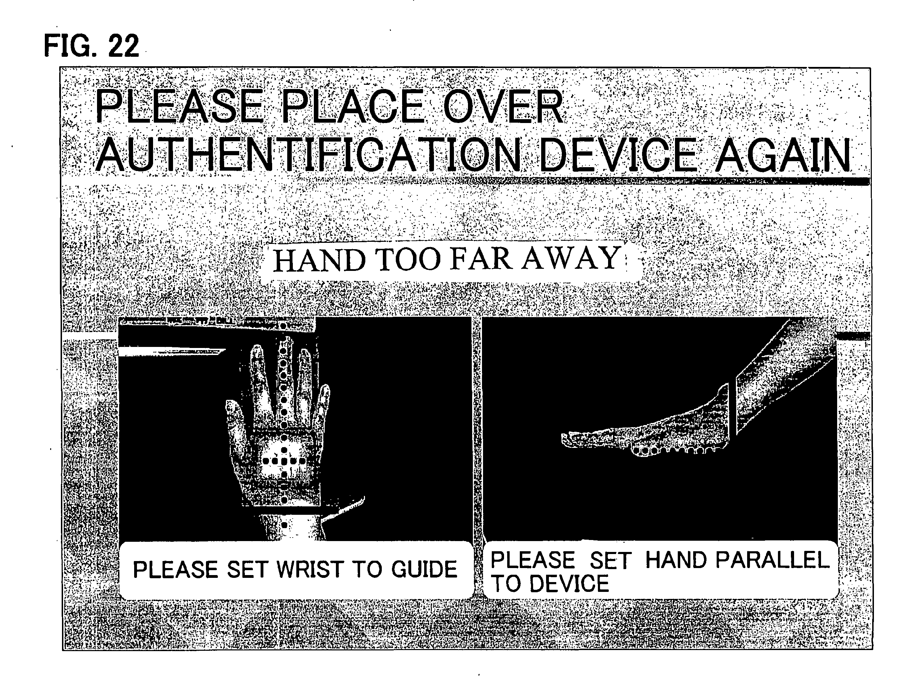

(316) If image capture is not successful within the prescribed number of operations, the guidance screens of Fig. 19 to Fig. 22 are displayed on the UOP 6-1. These guidance screens display guidance text corresponding to the cause according to analysis of the reason for lack of success in capturing images. Fig. 19 to Fig. 21 are examples of guidance screens for cases in which hand outline detection indicates that the palm is shifted to the left, right, forward, or backward with respect to the sensor 18. In Fig. 19 to Fig. 21, screens consist of text such as "Please place your hand over the authentication device again" and "Please check the position of your hand", and top- and side-view images of the appropriate position of the hand. Here, top- and side-view images with dashed lines added to indicate the appropriate position of the hand, which are the first screen of Fig. 19, a top-view image and a side-view image with a dashed line added to indicate the appropriate position of the hand, which are the second screen of Fig. 20, and a top-view image with dashed lines added to indicate the appropriate position of the hand and a side-view image without such lines added, which are the third screen of Fig. 21, are displayed in order. These order-of-operation screens are displayed repeatedly over a prescribed operation time (for example, 10 seconds). Similarly, Fig. 22 is an example of a guidance screen for a case in which distance detection indicates that the palm is too far away from the sensor 18. In Fig. 22, the screen consists of text such as "Please place your hand over the authentication device again" and "Your hand is too far away", together with top-view and side-view images of the appropriate hand position. Processing then returns to step S14.

(S18) If image capture succeeds within the prescribed number of operations, the authentication initiation screen of Fig. 23 is displayed on the UOP 6-1. The screen of Fig. 23 consists of the text "Please remove your hand", "Please wait", and "Now authenticating", and a prescribed image.

(S20) The control unit 67 of the ATM 6 performs the verification processing explained in Fig. 4, and judges whether the verification result is OK. If not OK, that is the verification result is NG, the control unit 67 judges whether there have been three consecutive NG results. If there have been three consecutive NG results, it is assumed that service is not possible, a service-not-possible screen is displayed, and processing ends.

(S22) If on the other hand there have not been three consecutive verification results of NG, in order to repeat image capture, a repeat-image-capture screen containing text such as "Please place your hand over the authentication device again" and "Authentication was unsuccessful" and a prescribed image is displayed on the UOP 6-1, and processing returns to the image capture processing of step S19 in Fig. 9.

(S29) If in step S20 the verification result is OK, an authentication-OK screen is displayed on the UOP 6-1, and processing proceeds to normal ATM transaction processing. That is, an account is selected if necessary, a password is input, an amount is input, the amount is confirmed, data is exchanged online with the server, media (card, bankbook and cash) is returned or dispensed, and the system then waits for the next customer.

Next, the verification processing of step S14 in Fig. 9 is explained using Fig. 11.

(S30) The image capture operations counter value n is initialized to "1".

(S32) The distance sensor 15 is caused to measure the distance to the palm, and the output is detected.

(S34) The detected distance and the focal distance determined by the sensor and lens 16 of the sensor unit 18 are compared, and a judgment is made as to whether the distance to the palm is within the appropriate range.

(S36) If the distance is appropriate, near-infrared light is emitted from the image capture device 1-1, the reflected light is received by the sensor 16, and an image of the palm is obtained. The above-described hand outline detection processing 30 detects the hand outline from the image captured by the image capture device 1, and judges from the outline whether the image is an image which can be used in verification processing. That is, as shown in Figs. 4 to 6, the image is used to judge whether the palm appears sufficiently in the image. For example, the distance between the outline and the image frame is calculated, and the distance is used to judge whether to shift position to the left or right, or forward or backward. Also, the center position of the palm may be calculated from the overall outline, and this may be used to judge whether to shift position leftward, rightward, forward or backward.

(S38) First, a judgment is made as to whether the position is shifted rightward, and if so, processing proceeds to step S48.

(S40) Next, if not shifted rightward, a judgment is made as to whether the position is shifted leftward, and if so, processing proceeds to step S48.

(S42) Next, if not shifted leftward, a judgment is made as to whether the position is shifted rearward (backward), and if so, processing proceeds to step S48.

(S44) Next, if not shifted backward, a judgment is made as to whether the position is shifted forward, and if so, processing proceeds to step S48.

(S46) If not shifted forward either, no shift in position has occurred, and so the image capture is judged to be successful, and the image is provided for verification processing. Execution then returns.

(S48) On the other hand, if in step S34 the distance is not appropriate, or in steps S38 to S44 a shift in position is detected, then a judgment is made as to whether the image capture operations counter value n has reached a specified number m (for example, 10 times).

(S50) If the image capture operations counter value n has not reached the specified number m (for example, 10), then the image capture NG (failure) cause (left/right/forward/backward position shift, distance shift) is stacked and held. The image capture operations counter value n is then updated to n+1, and processing returns to step S32.

(S52) On the other hand, if the image capture operations counter value n has reached the specified number m (for example, 10 times), it is judged that the relation between the palm and the sensor must be corrected. Hence the specified number m (for example, 10) of stacked image capture NG causes are analyzed. For example, these may be classified as position shifts (left, right, forward, backward) and distance shifts, and the number of each counted.

(S54) The most frequent cause of image capture NG is then detected from the count totals. If position shifts are the most common, then the guidance screen images with position-shift text shown in Fig. 19 to Fig. 21 are selected, and processing returns. If distance shifts are the most common, then the guidance screen image with the distance-shift text shown in Fig. 22 is selected, and processing returns.

Thus a plurality of image capture operations (including distance measurement) are performed in short intervals, and when there are frequent image capture NG failures, these are stacked, and if image capture NGs are not resolved after a prescribed number of image capture operations, it is judged that the relation between the palm and the sensor must be corrected. Stacked image capture NG causes of a specified number m (for example, 10) are analyzed, and screen guidance with regard to placement of the hand is provided according to the analysis results.

Hence because guidance screens do not change frequently, the user can fully understand the cause given and can change the placement of his hand. As a result, confusion on the part of the user can be avoided, the hand can quickly be placed in the appropriate position and at the appropriate distance, and the speed of authentication can be improved.

Because the most frequently occurring image capture NG cause is selected and a screen for that cause is presented, causes resulting in only occasional image capture NGs can be excluded, and the user can be guided more reliably.

### Other Embodiments

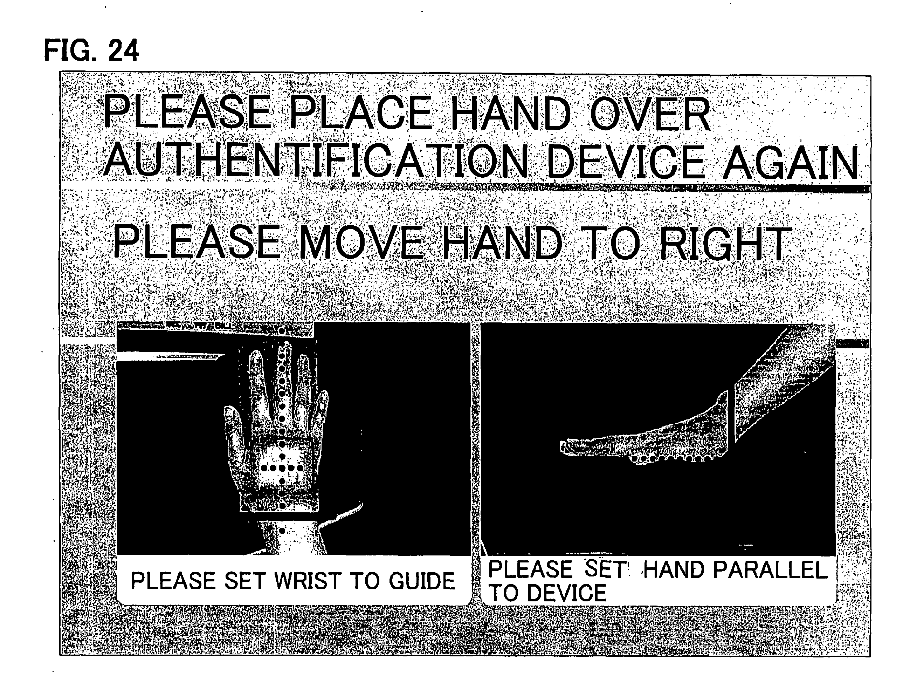

Fig. 24 explains a guidance screen for another embodiment of the invention. In the above-described example of Fig. 19 to Fig. 21, forward/backward/left/right position shifts were together classified as position shifts to display guidance; in this example, rather than combining forward/backward/left/right position shifts, each is classified individually to display guidance. That is, here a guidance screen is shown for the case in which the hand is shifted to the left, with the text "Please move your hand to the right" and the images of Fig. 19 to Fig. 21.

In the above-described embodiment, non-contact biometrics authentication was explained for the case of palm vein pattern authentication; but application to authentication using finger vein patterns, palm-prints and other features of the hand, as well as to fingerprint, facial feature, and other biometrics authentication is also possible. The case of use of a non-contact sensor was explained, but application to contact-type sensors is also possible. Also, use in automated equipment for financial business was explained; but application to automated ticket dispensing machines, automated vending machines, and automated equipment in other fields, as well as to computers, the opening and closing of doors requiring individual authentication, use in place of keys, and other tasks is also possible.

Similarly, vein pattern registration can also be performed in the ATM 6, and registration patterns may be stored in a server or similar instead of IC cards.

In the above, embodiments of the invention have been explained, but the invention is not limited to those embodiments and includes suitable modifications within the scope of the appended claims.

A plurality of image capture operations (including distance measurement) are performed at short intervals, and when image capture NG occurs frequently these are stacked, and if after a prescribed number of image capture operations the image capture NGs have still not been resolved, it is judged that the relation between body part and sensor must be corrected, the causes of the stacked image capture NGs are analyzed, and screen guidance for the relation between the body part and sensor is provided according to the analysis results.

Hence because guidance screens do not change frequently, the user can fully understand the cause of the problem and can change the position of the body part with respect to the sensor. As a result, confusion on the part of the user can be prevented, the body part can be moved quickly to an appropriate position and distance relative to the sensor, and the speed of authentication can be increased. Further, because the cause resulting in the greatest number of image capture NGs is selected and a screen indicating this cause is presented, causes resulting in only occasional image capture NGs can be excluded, and the user can be guided more reliably.

## Claims

1. A biometric authentication device for authenticating a user using biometrics, comprising:
an image capture device for capturing one or more images of a body part of the user;
a display device for displaying guidance screens to guide the user in operating the image capture device; and
a control unit for performing image capture operation of the image capture device and detecting biometric characteristic data from the one or more captured images of the body part for biometric authentication,
wherein the control unit is operable to judge, for each of the one or more captured images of the image capture device, whether the image capture operation has been successful, to temporarily store the cause of an unsuccessful image capture operation, and, after a prescribed number of unsuccessful image capture operations of the image capture device, to analyze the temporarily stored causes, and to display a guidance screen on the display device according to the results of the analysis.

2. The biometric authentication device according to Claim 1, wherein said control unit displays, on said display device, a guidance screen according to statistical information on said temporarily stored causes.

3. The biometric authentication device according to Claim 1 or 2, wherein said image capture device comprises:
an image capture sensor; and
a distance sensor for measuring the distance from said body part,
wherein said control unit is operable to detect shifts in position between said image capture sensor and said body part as well as shifts in distance between said image capture sensor and said body part, to judge whether said image capture operation is successful.

4. The biometric authentication device according to Claim 3, wherein said control unit classifies the causes of unsuccessful image capture operations as said shifts in position or said shifts in distance, and selectively displays, on said display device, a guidance screen for a shift in position or a guidance screen for a shift in distance, according to said classification result.

5. The biometric authentication device according to any preceding Claim, wherein said control unit displays, on said display device, a screen indicating the order of operation of said image capture device prior to the initiation of said image capture operations.

6. The biometric authentication device according to any preceding Claim, wherein, when the user is not authenticated, said control unit, after displaying on said display device a screen to repeat operation, initiates image capture operation of said image capture device.

7. The biometric authentication device according to any preceding Claim, wherein said image capture device comprises an image capture sensor,
and wherein said control unit is operable to detect position shifts between said image capture sensor and said body part, to judge whether said image capture operation is successful, to classify the cause of said unsuccessful image capture operation by direction of said position shift, and to display, on said display device, a guidance screen indicating the direction of position shift and/or a required correction thereof according to the result of said classification.

8. The biometric authentication device according to any preceding Claim, wherein the characteristic data of said body part is a blood vessel image pattern data of said body part.

9. The biometric authentication device according to any preceding Claim, wherein said control unit displays, as said guidance screens, text indicating the result of said analysis and an image indicating the appropriate positional relation of said body part to said image capture device.

10. A guidance screen control method for use with a biometric authentication device which captures an image of a body part and detects biometric characteristic data from the captured image for biometric authentication, the method comprising the steps of:
judging, from the output of an image capture operation of an image capture device which captures the image of said body part, whether said image capture operation has been successful;
temporarily storing the cause of an unsuccessful image capture operation;
analyzing temporarily stored causes of a number of unsuccessful image capture operations after the number of unsuccessful image capture operations of said image capture device exceeds a prescribed number; and
displaying a guidance screen according to the results of the analysis on a display device.

11. The guidance screen control method according to Claim 10, wherein said displaying step comprises a step of displaying, on said display device, a guidance screen according to statistical information on said temporarily stored causes.

12. The guidance screen control method according to Claim 10 or 11, wherein said judging step comprises:
a step of detecting position shifts between an image capture sensor of said image capture device and said body part and distance shifts between said image capture sensor and said body part, and
a step of judging whether said image capture operation is successful from said detection result.

13. The guidance screen control method according to Claim 12, wherein said analyzing step comprises a step of classifying said causes of unsuccessful image capture operations into said position shifts and said distance shifts,
and wherein said displaying step comprises a step of selectively displaying a guidance screen for position shifts and a guidance screen for distance shifts, according to the result of said classification.

14. The guidance screen control method according to any of Claims 10 to 13, further comprising a step of displaying, on said display device, a screen indicating the order of operation of said image capture device prior to the initiation of said image capture operations.

15. The guidance screen control method according to any of Claims 10 to 14, further comprising:
a step, when authentication is not satisfactory, of displaying on said display device a screen for a repeat operation; and
a step of initiating image capture operation of said image capture device.

16. The guidance screen control method according to any of Claims 10 to 15, wherein said judging step comprises a step of detecting a shift in position between an image capture sensor of said image capture device and said body part and of judging whether said image capture operation is successful,
and wherein said analyzing step comprises:
a step of classifying causes of said unsuccessful image capture operations by the direction of said position shifts; and
a step of displaying, on said display device, a guidance screen indicating the direction of position shift and/or a required correction thereof, according to the results of said classification.

17. The guidance screen control method according to any of Claims 10 to 16, wherein said biometric characteristic data is blood vessel image pattern data of said body part.

18. The guidance screen control method according to any of Claims 10 to 17, wherein said displaying step comprises a step of displaying, as said guidance screen, text indicating the result of said analysis and an image indicating the appropriate positional relationship between said image capture device and said body part.

19. A program containing program code which, when executed by a computer, causes the computer to perform the method according to any of claims 10 to 18.

## Patentansprüche

1. Biometrische Authentifizierungsvorrichtung zum Authentifizieren eines Benutzers mit Hilfe von Biometrie, umfassend:
eine Bildertassungsvorrichtung, die ein oder mehrere Bilder eines Körperteils des Benutzers erfasst;
eine Anzeigevorrichtung zum Darstellen von Führungsbildschirmen, die den Benutzer beim Bedienen der Bilderfassungsvorrichtung führen; und
eine Steuereinheit, die einen Bilderfassungsvorgang der Bilderfassungsvorrichtung ausführt und charakteristische biometrische Daten anhand des einen oder der mehreren erfassten Bilder des Körperteils für die biometrische Authentifizierung erkennt,
wobei die Steuereinheit so betreibbar ist, dass sie für das eine oder jedes erfasste Bild der Bildertassungsvorrichtung beurteilt, ob der Bilderfassungsvorgang erfolgreich war, damit die Ursache eines erfolglosen Bilderfassungsvorgangs vorübergehend gespeichert wird, und dass nach einer vorgeschriebenen Anzahl erfolgloser Bilderfassungsvorgänge der Bilderfassungsvorrichtung die vorübergehend gespeicherten Ursachen analysiert werden, und dass auf der Anzeigevorrichtung ein Führungsbildschirm entsprechend den Ergebnissen der Untersuchung dargestellt wird.

2. Biometrische Authentifizierungsvorrichtung nach Anspruch 1, worin die Steuereinheit auf der Anzeigevorrichtung einen Führungsbildschirm bezüglich statistischer Informationen über die vorübergehend gespeicherten Ursachen darstellt.

3. Biometrische Authentifizierungsvorrichtung nach Anspruch 1 oder 2, worin die Bilderfassungsvorrichtung umfasst:
einen Bilderfassungssensor; und
einen Entfemungssensor, der die Entfernung zu dem Körperteil misst,
wobei die Steuereinheit so betreibbar ist, dass sie Positionsverschiebungen zwischen dem Bilderfassungssensor und dem Körperteil erkennt sowie Entfemungsverschiebungen zwischen dem Bilderfassungssensor und dem Körperteil, um festzustellen, ob der Bilderfassungsvorgang erfolgreich ist.

4. Biometrische Authentifizierungsvorrichtung nach Anspruch 3, worin die Steuereinheit die Ursachen erfolgloser Bilderfassungsvorgänge klassifiziert, etwa Positionsverschiebungen oder Entfemungsverschiebungen, und ausgewählt auf der Anzeigevorrichtung abhängig von dem Klassifizierungsergebnis einen Führungsbildschirm für eine Positionsverschiebung oder einen Führungsbildschirm für eine Entfemungsverschiebung darstellt.

5. Biometrische Authentifizierungsvorrichtung nach irgendeinem vorhergehenden Anspruch, wobei die Steuereinheit auf der Anzeigevorrichtung einen Bildschirm darstellt, der die Reihenfolge der Operationen der Bildertassungsvorrichtung vor dem Beginn der Bilderfassungsvorgänge anzeigt.

6. Biometrische Authentifizierungsvorrichtung nach irgendeinem vorhergehenden Anspruch, worin, falls der Benutzer nicht authentifiziert wird, die Steuereinheit nach der Darstellung eines Bildschirms zum Wiederholen des Vorgangs auf der Anzeigevorrichtung einen Bilderfassungsvorgang der Bilderfassungsvorrichtung beginnt.

7. Biometrische Authentifizierungsvorrichtung nach irgendeinem vorhergehenden Anspruch, worin die Bilderfassungsvorrichtung einen Bilderfassungssensor enthält,
und worin die Steuereinheit so betreibbar ist, dass sie Positionsverschiebungen zwischen dem Bilderfassungssensor und dem Körperteil erkennt, um zu beurteilen, ob der Bilderfassungsvorgang erfolgreich ist, und die Ursache des erfolglosen Bilderfassungsvorgangs durch die Richtung der Positionsverschiebung zu klassifizieren, und auf der Anzeigevorrichtung einen Führungsbildschirm darzustellen, der die Richtung der Positionsverschiebung und/oder eine erforderliche Korrektur der Position abhängig vom Ergebnis der Klassifizierung angibt.

8. Biometrische Authentifizierungsvorrichtung nach irgendeinem vorhergehenden Anspruch, worin die charakteristischen Daten des Körperteils Blutgefäß-Bildmusterdaten des Körperteils sind.

9. Biometrische Authentifizierungsvorrichtung nach irgendeinem vorhergehenden Anspruch, worin die Steuereinheit als Führungsbildschirme Text darstellt, der das Ergebnis der Analyse angibt, sowie ein Bild, das die geeignete Position des Körperteils bezüglich der Bilderfassungsvorrichtung zeigt.

10. Führungsbildschirm-Steuerverfahren zum Gebrauch mit einer biometrischen Authentifizierungsvorrichtung, die ein Bild eines Körperteils aufnimmt und aus dem aufgenommenen Bild charakteristische biometrische Daten für die biometrische Authentifizierung entnimmt, wobei das Verfahren die Schritte umfasst:
anhand des Ausgangssignals eines Bilderfassungsvorgangs einer Bilderfassungsvorrichtung, die das Bild des Körperteils aufnimmt, das Beurteilen, ob der Bilderfassungsvorgang erfolgreich war,
das zeitweilige Speichern der Ursache eines erfolglosen Bilderfassungsvorgangs;
das Analysieren der zeitweilig gespeicherten Ursachen einer Anzahl erfolgloser Bilderfassungsvorgänge, wenn die Anzahl der erfolglosen Bilderfassungsvorgänge der Bilderfassungsvorrichtung eine vorgeschriebene Anzahl überschreitet; und
das Anzeigen eines Führungsbildschirms abhängig von den Ergebnissen der Analyse auf einer Anzeigevorrichtung.

11. Führungsbitdschirm-Steuerverfahren nach Anspruch 10, worin der Anzeigeschritt einen Schritt umfasst, in dem auf der Anzeigevorrichtung ein Führungsbildschirm dargestellt wird, der statistische Informationen über die zeitweilig gespeicherten Ursachen enthält.

12. Führungsbildschirm-Steuerverfahren nach Anspruch 10 oder 11, worin der Beurteilungsschritt umfasst:
einen Schritt, in dem Positionsverschiebungen zwischen einem Bilderfassungssensor der Bilderfassungsvorrichtung und dem Körperteil erkannt werden sowie Entfemungsverschiebungen zwischen dem Bilderfassungssensor und dem Körperteil, und
einen Schritt, in dem anhand des Erfassungsergebnisses beurteilt wird, ob der Bilderfassungsvorgang erfolgreich ist.

13. Führungsbildschirm-Steuerverfahren nach Anspruch 12, worin der Analyseschritt einen Schritt des Klassifizierens der Ursachen von erfolglosen Bilderfassungsvorgängen nach Positionsverschiebungen und Entfemungsverschiebungen umfasst,
und worin der Anzeigeschritt einen Schritt umfasst, in dem abhängig von dem Ergebnis der Klassifizierung ausgewählt ein Führungsbildschirm für Positionsverschiebungen und ein Führungsbildschirm für Entfemungsverschiebungen dargestellt wird.

14. Führungsbildschirm-Steuerverfahren nach irgendeinem der Ansprüche 10 bis 13, zudem umfassend einen Schritt, in dem auf der Anzeigevorrichtung ein Bildschirm dargestellt wird, der die Verarbeitungsreihenfolge der Bilderfassungsvorrichtung vor dem Beginn der Bilderfassungsvorgänge anzeigt.

15. Führungsbildschirm-Steuerverfahren nach irgendeinem der Ansprüche 10 bis 14, zudem umfassend:
einen Schritt, in dem auf der Anzeigevorrichtung ein Bildschirm für einen Wiederholungsvorgang dargestellt wird, falls die Authentifizierung erfolglos ist; und
einen Schritt, in dem der Bilderfassungsvorgang der Bilderfassungsvorrichtung in Gang gesetzt wird.

16. Führungsbildschirm-Steuerverfahren nach irgendeinem der Ansprüche 10 bis 15, worin der Beurteilungsschritt einen Schritt umfasst, in dem eine Positionsverschiebung zwischen einem Bilderfassungssensor der Bilderfassungsvorrichtung und dem Körperteil erkannt wird und beurteilt wird, ob der Bilderfassungsvorgang erfolgreich ist,
und worin der Analyseschritt umfasst:
einen Schritt, in dem die Ursachen der erfolglosen Bilderfassungsvorgänge durch die Richtung der Positionsverschiebungen klassifiziert werden; und
einen Schritt, in dem auf der Anzeigevorrichtung abhängig von den Ergebnissen der Klassifizierung ein Führungsbildschirm dargestellt wird, der die Richtung der Positionsverschiebung und/oder eine erforderliche Korrektur dafür anzeigt.

17. Führungsbildschirm-Steuerverfahren nach irgendeinem der Ansprüche 10 bis 16, worin die charakteristischen biometrischen Daten die Blutgefäß-Bildmusterdaten des Körperteils sind.

18. Führungsbildschirm-Steuerverfahren nach irgendeinem der Ansprüche 10 bis 17, worin der Anzeigeschritt als Führungsbildschirm einen Schritt des Darstellens von Text umfasst, der das Ergebnis der Analyse angibt, und eines Bilds, das die geeignete gegenseitige Position der Bitderfassungsvorrichtung und des Körperteils angibt.

19. Programm, das Programmcode enthält, der bei einer Ausführung auf einem Computer den Computer veranlasst, das Verfahren gemäß irgendeinem der Ansprüche 10 bis 18 auszuführen.

## Revendications

1. Un dispositif authentification biométrique pour authentifier un utilisateur en utilisant la biométrie, comportant :
- un dispositif de capture d'image pour capturer une ou plusieurs images d'une partie du corps de l'utilisateur ;
- un dispositif d'affichage pour afficher des écrans de guidage pour guider l'utilisateur en faisant fonctionner le dispositif de capture d'images ; et
- une unité de commande pour effectuer l'opération de capture d'image du dispositif de capture d'image et détecter les données caractéristiques biométriques à partir d'une ou plusieurs images capturées de la partie de corps pour l'authentification biométrique,
- où l'unité de commande fonctionne pour juger , pour chacune de l'une ou plusieurs images capturées du dispositif de capture d'image, si l'opération de capture d'image a été fructueuse , pour stocker temporairement la raison d'une opération de capture d'image sans succès , et, pour analyser, après un nombre prescrit d'opérations de capture d'image sans succès du dispositif de capture d'image, des raisons stockées temporairement , et pour afficher un écran de guidage sur le dispositif d'affichage selon les résultats de l'analyse.

2. Le dispositif d'authentification biométrique selon la revendication 1, où ladite unité de commande affiche sur ledit dispositif d'affichage un écran de guidage selon l'information statistique sur lesdites raisons stockées temporairement.

3. Le dispositif d'authentification biométrique selon la revendication 1 ou 2, où ledit dispositif de capture d'image comporte :
- un capteur de capture d'image ; et
- un capteur de distance pour mesurer la distance de ladite partie de corps,
- où ladite unité de commande fonctionne pour détecter des déplacements de position entre ledit capteur de capteur d'image et ladite partie de corps ainsi que des déplacements de distance entre ledit capteur de capteur d'image et ladite partie de corps, pour juger si l'opération de capture d'image est fructueuse.

4. Le dispositif d'authentification biométrique selon la revendication 3, où ladite unité de commande classifie les raisons pour des opérations de capture d'image sans succès en tant que déplacements de position ou déplacements de distance, et affiche de façon sélective sur ledit dispositif d'affichage un écran de guidage pour un déplacement de position et un écran de guidage pour un déplacement de distance , selon ledit résultat de classification .

5. Le dispositif d'authentification biométrique selon n'importe laquelle revendication précédente, où ladite unité de commande affiche, sur ledit dispositif d'affichage, un écran indiquant l'ordre d'opération dudit dispositif de capture d'image avant l'initiation desdites opérations de capture d'image.

6. Le dispositif d'authentification biométrique selon n'importe laquelle revendication précédente, où ladite unité de commande déclenche l'opération de capture d'image dudit dispositif de capture d'image, lorsque l'utilisateur n'est pas authentifié, après avoir affiché sur ledit dispositif d'affichage un écran pour répéter l'opération.

7. Le dispositif d'authentification biométrique selon n'importe laquelle revendication précédente, où ledit dispositif de capture d'image comporte un capteur de capture d'image,

8. Le dispositif d'authentification biométrique selon n'importe laquelle revendication précédente, où les données caractéristiques de ladite partie de corps sont des données de formes d'image des vaisseaux sanguins de ladite partie de corps.

9. Le dispositif d'authentification biométrique selon n'importe laquelle revendication précédente, où ladite unité de commande affiche, comme écrans de guidage, un texte indiquant la relation de position appropriée de ladite partie de corps par rapport audit dispositif de capture d'image.

10. Un procédé de commande d'écran de guidage pour une utilisation avec un dispositif d'authentification biométrique qui capture une image de ladite partie de corps et détecte des données caractéristiques biométriques à partir de l'image pour l'authentification biométrique, le procédé comprenant les étapes suivante :
- juger si l'opération de capture d'image a été fructueuse, à partir de la sortie d'une opération de capture d'image d'un dispositif de capture d'image qui capture l'image de ladite partie de corps ;
- stocker temporairement la raison d'une opération de capture d'image sans succès ;
- analyser temporairement les raisons stockées d'un nombre d'opérations de capture d'image sans succès dès que le nombre d'opérations de capture d'image sans succès dudit dispositif de capture d'image dépasse un nombre prescrit ;
- afficher un écran de guidage selon les résultats de l'analyse d'un dispositif d'affichage.

11. Un procédé de commande d'écran de guidage selon la revendication 10, où ladite étape d'affichage comprend une étape d'affichage d'un écran d'affichage sur ledit dispositif d'affichage selon l'information statistique sur lesdites raisons stockées temporairement.

12. Un procédé de commande d'écran de guidage selon les revendications 10 ou 11, où ladite étape de jugement comprend :
- une étape pour détecter des déplacements de positions entre un capteur de capture d'image et ladite partie de corps et des déplacements de distance entre un capteur de capture d'image et ladite partie de corps, et
- une étape pour juger ledit résultat de détection si ladite opération de capture d'image est sans succès.

13. Un procédé de commande d'écran de guidage selon la revendication 12, où ladite étape d'analyse comprend une étape de classification des dites opérations de capture d'image sans succès en déplacements de position et déplacements de distance,
- et où ladite étape d'affichage comprend une étape pour afficher sélectivement un écran de guidage pour des déplacement de position et des déplacement de distance , selon le résultat de ladite classification.

14. Un procédé de commande d'écran de guidage selon n'importe laquelle des revendications 10 à 13, comprenant en outre une étape d'affichage sur ledit dispositif d'affichage, un écran indiquant l'ordre d'opération dudit dispositif de capture d'image avant le déclenchement des dites opérations de capture d'image.

15. Un procédé de commande d'écran de guidage selon n'importe laquelle des revendications 10 à 14, comprenant en outre :
- une étape d'affichage d'un écran pour une opération de répétition sur ledit dispositif d'affichage lorsque l'authentification n'est pas suffisante ; et
- une étape de déclenchement de l'opération de capture d'image dudit dispositif de capture d'image.

16. Un procédé de commande d'écran de guidage selon n'importe laquelle des revendications 10 à 15, où ladite étape de jugement comprend une étape pour détecter un déplacement de position entre un capteur de capture d'image dudit dispositif de capture d'image et ladite partie de corps et pour juger si ladite opération de capture d'image est fructueuse,
- et où ladite étape d'analyse comprend :
- une étape pour classifier lesdites opérations de capture d'image sans succès par la direction des dites déplacements de position ; et
- une étape d'affichage d'un écran de guidage sur ledit dispositif d'affichage indiquant la direction du déplacement de position et / ou d'une correction exigée de ce déplacement selon les résultats de ladite classification.

17. Un procédé de commande d'écran de guidage selon n'importe laquelle des revendications 10 à 16, où lesdites données caractéristiques de ladite partie de corps sont des données de formes d'image des vaisseaux sanguins de ladite partie de corps.

18. Un procédé de commande d'écran de guidage selon n'importe laquelle des revendications 10 à 17, où ladite étape d'affichage comprend une étape d'affichage, en tant qu'écran de guidage, d'un texte indiquant le résultat de ladite analyse et une image indiquant la relation de position appropriée entre ledit dispositif de capture d'image et ladite partie de corps.

19. Un programme comprenant un code de programme qui invite l'ordinateur à effectuer le procédé selon n'importe laquelle des revendications 10 à 18 lorsque ledit programme est exécuté par un ordinateur.
